# EUROPÄISCHE PATENTSCHRIFT

(11) **EP 3 921 231 B1**
(45) Veröffentlichungstag und Bekanntmachung des Hinweises auf die Patenterteilung: **18.01.2023**
(21) Anmeldenummer: 20704448.8
(22) Anmeldetag: 03.02.2020
(51) Int. Cl.: F16H 1/28, H02K 7/116, H02K 16/00, B64C 27/12

(54) **ANTRIEB, INSBESONDERE FÜR DEN HAUPTROTOR EINES DREHFLÜGLERS**
DRIVE, ESPECIALLY FOR THE MAIN ROTOR OF A ROTARY WING AIRCRAFT
ENTRAÎNEMENT, NOTAMMENT POUR LE ROTOR PRINCIPAL D'UN AVION À VOILURE TOURNANTE

(30) Priorität: 07.02.2019 CH 1542019
(43) Veröffentlichungstag der Anmeldung: 15.12.2021
(73) Patentinhaber: kopter group ag, 8753 Mollis (CH)
(72) Erfinder: EVEN, Detlev, Matthias, 85635 Höhenkirchen-Siegertsbrunn (DE); HETTENKOFER, Johann, Werner, 85521 Ottobrunn (DE); DUMMEL, Andreas, 85662 Hohenbrunn (DE); LÖWENSTEIN, Andreas, 8620 Wetzikon (CH)
(74) Vertreter: Keller Schneider Patent- und Markenanwälte AG
(86) Internationale Anmeldenummer: PCT/EP2020/052589
(87) Internationale Veröffentlichungsnummer: WO 2020/161061

(56) Entgegenhaltungen:
- CN-A- 108 082 499
- CN-A- 108 215 765
- CN-A- 108 773 263
- US-A1- 2012 329 593

## Beschreibung

### Technisches Gebiet

Die vorliegende Erfindung beschreibt eine Antriebseinheit, insbesondere zum Antreiben des Hauptrotors eines Drehflüglers, gemäss Oberbegriff des ersten Patentanspruches.

Im Weiteren beschreibt die vorliegende Erfindung einen Hybridantrieb mit der erfindungsgemässen Antriebseinheit, insbesondere zum Antreiben des Hauptrotors eines Drehflüglers, sowie einen Drehflügler umfassend den Hybridantrieb beziehungsweise die Antriebseinheit.

### Stand der Technik

Bekannt sind aus dem Stand der Technik Antriebseinheiten in den unterschiedlichsten Anwendungsgebieten der Antriebstechnik oder der Energiegewinnung. Solche Antriebseinheiten umfassen oftmals so genannte Planetengetriebe oder verwandte, vergleichbare Getriebe.

Definitionsgemäss handelt es sich bei Planetengetrieben um so genannte Umlaufgetriebe (aufgrund des Umlaufens von Planeten um ein Sonnenrad), welche im Wesentlichen ein mittig angeordnetes Sonnenrad, mindestens ein, meist mehrere, Planetenräder, den Planetenrädern zugehörige Planetenträger, sowie ein aussenliegendes, innenverzahntes Hohlrad beziehungsweise einen aussenliegenden, innenverzahnten Zahnradring umfassen. Die Vorteile bei der Verwendung von Planetengetrieben liegt in den vielfältigen Übersetzungsmöglichkeiten sowie in einer gleichmässigen und verteilten Kraftübertragung.

Planetengetriebe finden in Antriebseinheiten in verschiedenen technischen Gebieten Anwendung wie beispielsweise in Windturbinen, im Fahrzeugbau beziehungsweise bei Automobilen, in Schiffsantrieben, in der Aviatik etc.

Aus dem Dokument US 9,797,504 B2 ist beispielsweise die Verwendung eines Planetengetriebes für eine Windturbine bekannt. Bei der durch den Wind verursachten (bzw. durch den Wind angetriebene) Rotation der Rotorwelle der Windturbine wird durch das Planetengetriebe eine Übersetzung beziehungsweise Konvertierung erzielt von einer niedrigen Umdrehungszahl und hohem Drehmoment bei der Rotorwelle zu einer hohen Umdrehungszahl und niedrigem Drehmoment beim Generator.

Bei Drehflüglern, insbesondere im Bereich Helikopterbau, umfasst die Antriebseinheit zum Antreiben des Hauptrotors oftmals ein als Planetengetriebe oder verwandtes Getriebe ausgestaltetes Helikopterrotorgetriebe beziehungsweise Hauptrotorgetriebe. Diese Art Helikopterrotorgetriebe hat sich durchgesetzt, da dadurch eine zuverlässige Bauweise ermöglicht wird.

Solche im Bereich der Antriebstechnik verwendeten Planetengetriebe haben den Nachteil, dass deren Platzbedarf enorm ist und zudem zu einem unerwünscht komplexen Aufbau einer Antriebseinheit führen können.

Die US 2012/0329593 beschreibt ein Kupplungsloses Hybridgetriebesystem für Fahr- oder Flugzeuge mit einem Planetengetriebe, das eine abwechselnde oder gleichzeitige Kraftkopplung zwischen mindestens zwei Kraftquellen und mindestens einer Antriebswelle bereitstellt.

Aus der CN 10802499 A ist ein planetarisches Hybrid-Krafthelikopter-Kraftkupplungssystem bekannt mit einem Hauptrotorsystem und einem Heckrotorsystem, wobei das Hauptrotorsystem eine vordere Planetenreihe und eine hintere Planetenreihe umfasst. Dadurch können Kraftstoffverbrauch und Emissionen reduziert werden.

Die CN 108215765 A offenbart eine elektromagnetische Kupplungsantriebsachse einer Differentialkaskadenmaschine für ein Hybridkraftfahrzeug mit einem Planetengetriebe-Mechanismus der ersten Stufe und einer Planetenrad-Planetenreihe der zweiten und der dritten Stufe auf der Antriebsachse.

Die CN 108773263 A beschreibt ein Fahrzeughybridantriebssystem umfassend einen Motor und eine Planetenleitung. Sie können in verschiedenen Leistungsmodi arbeiten, um die Stabilität und Zuverlässigkeit der Leistung zu verbessern.

### Darstellung der Erfindung

Die vorliegende Erfindung hat sich zur Aufgabe gestellt, eine kompakte und vereinfachte Antriebseinheit in verschiedensten Anwendungsgebieten, insbesondere zum Antreiben eines Hauptrotors eines Drehflüglers, bereitzustellen.

Diese Aufgabe erfüllt eine Antriebseinheit mit den Merkmalen des Patentanspruches 1, ein Hybridantrieb mit den Merkmalen des Patentanspruches 5 beziehungsweise ein Drehflügler mit den Merkmalen des Patentanspruchs 6.

Erfindungsgemäss ist in mindestens einen Planeten ein erster Antrieb, insbesondere ein elektrischer Antrieb, integriert, wodurch ein innerer Antrieb innerhalb des Planetengetriebes gebildet wird.

Im Sinne der vorliegenden Erfindung ist der mindestens eine Planet selber als ein Antrieb ausgestaltet beziehungsweise bildet im Wesentlichen den ersten Antrieb. Als wesentlicher Unterschied gegenüber der bis anhin bekannten Verwendung von Planetengetrieben (beispielsweise aus der US 9,797,504 B2) kann angeführt werden, dass gemäss der vorliegenden Erfindung neu das Planetengetriebe (aufgrund des mindestens einen als Antrieb ausgestalteten Planeten) als Antriebseinheit fungieren kann beziehungsweise ein innerer Antrieb innerhalb des Planetengetriebes gebildet wird.

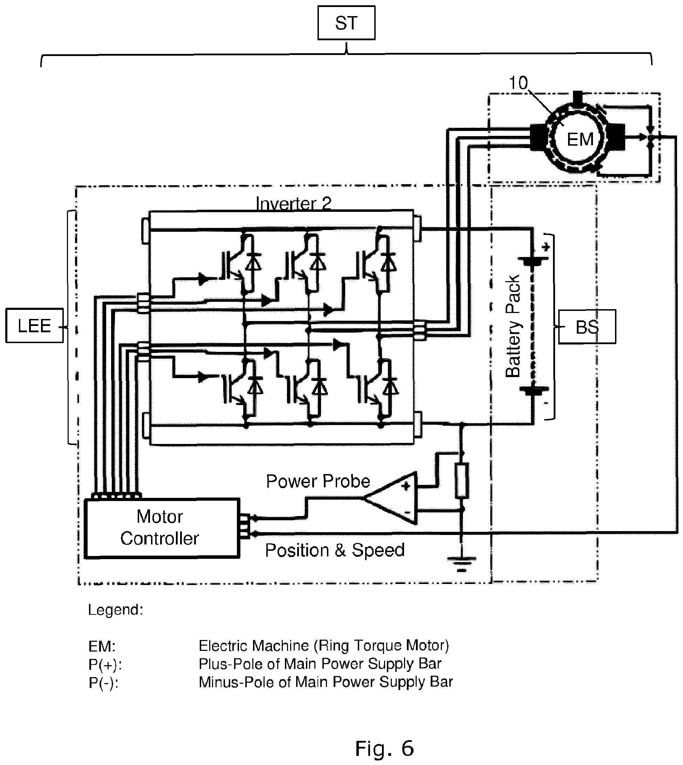

Im Sinne der vorliegenden Erfindung kann lediglich ein einziger Planet als ein Antrieb fungieren beziehungsweise ausgestaltet sein, wobei vorzugsweise zur optimalen Leistungsverteilung alle Planeten als Antrieb fungieren. Besonders bevorzugt umfasst deshalb die erfindungsgemässe Antriebseinheit eine Steuereinheit, welche derart ausgestaltet ist, um die in den Planeten integrierten Antriebe miteinander zu synchronisieren. Des Weiteren können diese in den Planeten integrierten Antriebe mechanisch, elektrisch oder hydraulisch jeweils mittels einer geeigneten Kupplung voneinander entkoppelbar ausgestaltet sein, um eine mögliche Blockierung des Getriebes durch eine Fehlfunktion eines oder mehrerer Antriebe zu verhindern. Im Sinne der vorliegenden Erfindung ist die Ansteuerung als Standardansteuerung für elektrische Synchronmotoren mit Steuerlogik und Leistungselektronik-Einheit LEE (auch als "inverter" bezeichnet) ausgeführt. Die Steuerlogik (Motor-Controller) produziert die entsprechenden Signale, welche den Inverter ansteuern, der dann die entsprechenden Motorspulen des Synchronmotors erregt, um eine fortlaufende Drehung mit definierter Drehzahl und Drehmoment zu bekommen. Die Synchronisierung der elektrischen Synchronmotoren wird durch Ermittlung der Position und der Drehgeschwindigkeit des Ankers und für jeden elektrischen Synchronmotor individuell durch Berechnung der Steuersignale ermöglicht. In diesem Sinne zeigt Fig.6 eine geeignete Übersicht.

Gemäss einer bevorzugten Weiterentwicklung der vorliegenden Erfindung kann die Antriebseinheit auch einen einzigen, d.h. als ein einziges zusammenhängendes Bauteil ausgestalteten, Planetenradträger umfassen, wobei der Planetenradträger mindestens eine, bevorzugt eine Vielzahl von Aufnahmeöffnungen für die Planeten umfasst.

Weitere vorteilhafte Ausgestaltungsformen sind in den abhängigen Patentansprüchen angegeben.

Vorzugsweise sind die Planetenräder ortsfest und um ihre jeweiligen Planetenradachsen rotierbar gelagert, wobei die ortsfesten Planetenräder von einem um die zentrische Achse der Antriebseinheit rotierbaren innenverzahnten Zahnradring umschlossen und der Zahnradring derart rotierbar ist, so dass die Welle, insbesondere die Rotorwelle, mittels eines am Zahnradring und an der Welle, insbesondere Rotorwelle, befestigten Zahnradringmitnehmers in Rotation versetzbar ist. Dadurch wird eine verwandte, vergleichbare Form eines Planetengetriebes geschaffen. Solche ortsfesten Planetenräder haben den Vorteil, dass die Energieversorgung des in die Planeten integrierten Antriebs mittels elektrischen Versorgungsleitungen erleichtert ist.

Grundsätzlich ist jedoch auch ein als Umlaufgetriebe ausgestaltetes Planetengetriebe im Rahmen der vorliegenden Erfindung denkbar, in welchem die Planetenräder nicht ortsfest, d.h. um das Sonnenrad rotierend beziehungsweise das Sonnenrad umlaufend, angeordnet sind. Beispielsweise könnte gemäss einer solchen bevorzugten Ausführungsform die Stromzuführung der in die Planetenräder integrierten Antriebe über Schleifringe realisiert werden.

Grundsätzlich sind beliebige Ausgestaltungen des in den mindestens einen Planeten integrierten, ersten Antriebs denkbar, wobei der erste Antrieb beispielsweise ein als thermodynamische Kraftmaschine ausgestalteter Antrieb sein kann. Besonders bevorzugt ist der erste Antrieb als ein elektrisch hinsichtlich Drehzahl und Drehmoment regelbarer Motor, insbesondere als ein elektrischer Synchronmotor mit Innenläuferteil, ausgestaltet. Im Sinne der vorliegenden Erfindung kann alternativ unter einem elektrisch hinsichtlich Drehzahl und Drehmoment regelbaren Motor beispielsweise auch ein Asynchronmotor, Reluktanzmotor, Transversalflussmotor, oder dergleichen verstanden werden.

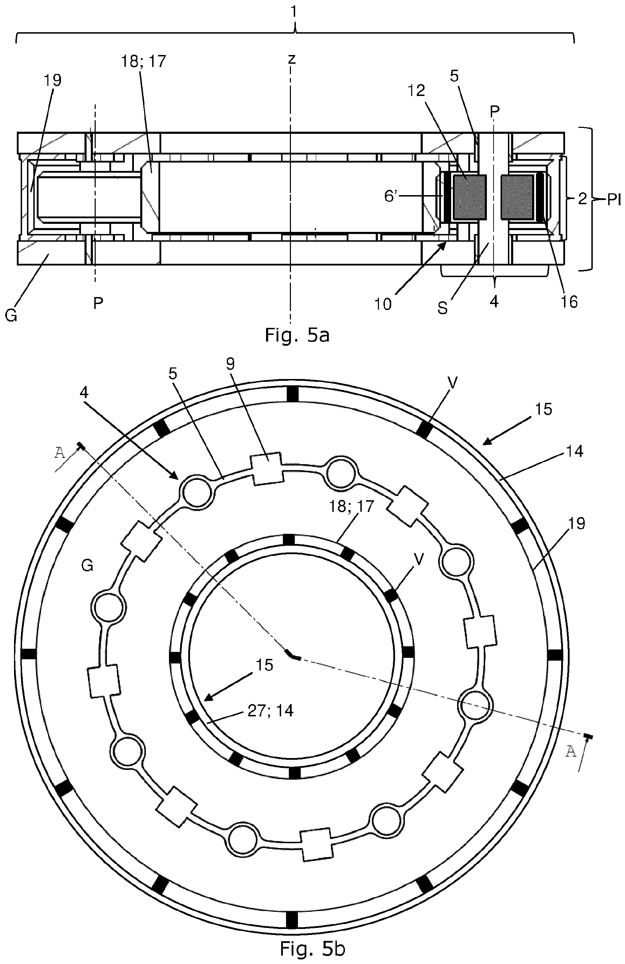

Alternativ ist zudem eine Aussenläufervariante eines elektrischen Synchronmotors im Rahmen der vorliegenden Erfindung denkbar, wobei der Aussenläufer des elektrischen Synchronmotors drehfest mit dem Planetenrad verbunden ist. Beispielsweise könnte der Aussenläufer mit einem Zahnkranz dergestalt drehfest verbunden sein, so dass Planetenrad und Aussenläufer des elektrischen Synchronmotors in der gleichen Ebene liegen und eine Einheit bilden. In diesem Sinne zeigen die Fig.5a bis 5d eine geeignete Übersicht.

Vorzugsweise ist der erste Antrieb ein elektrischer Antrieb beziehungsweise ein Elektromotor, wobei der mindestens eine Planet einen ruhenden Ständerteil, einen rotierbaren Läuferteil, insbesondere Innenläuferteil, und das mindestens eine indirekt oder direkt am Läuferteil befestigte Planetenrad mit einer Aussenverzahnung umfasst und der Planet mittels Planetenträger innerhalb des Planetengetriebes mit dem Sonnenrad und / oder der rotierbaren Welle wirkverbunden gehalten ist.

Besonders bevorzugt umfasst das Planetengetriebe des erfindungsgemässen Antriebs mindestens drei Planeten, noch bevorzugter drei bis sechs Planeten. Durch die Verwendung von mindestens drei Planeten kann ein stabiler Aufbau eines Planetengetriebes sichergestellt werden. Durch die Verwendung von mehr als drei Planeten wird vorteilhaft ein modularer Aufbau erzielt und verschiedene Leistungsstufen mit niedrigem Aufwand können fertigungstechnisch konfektioniert werden. Dies hat den weiteren Vorteil, dass ein hoher Leistungsbedarf durch den modularen Aufbau auf mehrere Stufen mit niedriger elektrischer Leistung verteilt werden kann, wodurch sich durch die resultierende, grössere Oberfläche physikalisch und fertigungstechnisch ein Vorteil für das Abführen der Verlustleistungswärme von Motor und Steuerung ergibt. Zusätzlich schützt ein über mehrere Stufen verteilter, elektrischer Antrieb noch besser vor dem Totalausfall des Gesamtantriebs bei Ausfall des zweiten, als thermodynamische Kraftmaschine ausgestalteten Antriebs.

Grundsätzlich kann die erfindungsgemässe Antriebseinheit lediglich mindestens einen, vorzugsweise eine Vielzahl von ersten elektrischen Antrieben, integriert jeweils in die Planeten, umfassen und damit als vollelektrische Antriebseinheit ausgebildet sein. Ein weiterer Aspekt der vorliegenden Erfindung betrifft jedoch einen Hybridantrieb umfassend die erfindungsgemässe Antriebseinheit, wobei der erste, insbesondere elektrische, Antrieb mit einem zweiten, als thermodynamische Kraftmaschine ausgestalteten, Antrieb mechanisch gekoppelt werden kann.

Ein weiterer Aspekt der vorliegenden Erfindung betrifft einen Drehflügler umfassend die erfindungsgemässe Antriebseinheit oder der erfindungsgemässe Hybridantrieb.

Vorzugsweise ist der mindestens eine, vorzugsweise die Vielzahl erster elektrischer Antriebe, insbesondere der elektrische Synchronmotor mit Innenläuferteil, derart ausgelegt und dimensioniert, so dass ein Hauptrotor und / oder Heckrotor eines Drehflüglers, insbesondere eines Helikopters, autark ohne einen zusätzlichen Antrieb antreibbar ist und somit ein Drehflügler mit einer vollelektrischen Antriebseinheit erzielt wird. Im Sinne der vorliegenden Erfindung wird unter einem autarken, elektrischen Antrieb verstanden, dass je nach Dimensionierung eine beliebige mechanische Leistung abgegeben werden kann. Hinsichtlich mechanischer Leistung eines autarken, elektrischen Antriebs ist bevorzugt mindestens 150kW, bevorzugter 200kW bis 700kW, noch bevorzugter 300kW bis 600kW, ganz besonders bevorzugt rund 600kW erzielbar. Als Beispiel kann anhand eines elektrischen Antriebs von rund 600kW mechanischer Leistung bei einer niedrigen Drehzahl von 371rpm ein hohes Drehmoment von ca. 15'500Nm oder mehr erzielt werden.

Bevorzugt kann der erste, insbesondere elektrische, Antrieb mit dem zweiten, als thermodynamische Kraftmaschine ausgestalteten, Antrieb mechanisch gekoppelt werden, insbesondere indem das zentrale Sonnenrad durch die zweite Antriebseinheit antreibbar ist. Bevorzugt kann die zweite Antriebseinheit mit einem zweiten, als thermodynamische Kraftmaschine ausgestalteten Antrieb oder auch als weiterer elektrischer Antrieb in einer mechanischen Wirkverbindung stehen, beispielsweise mit einem Verbrennungsmotor, Turbinenmotor, Fremdzündungsmotor, Dieselmotor, Brennstoffzellenantrieb oder dergleichen. Der mindestens eine elektrische Antrieb und der zweite Antrieb sind über das Planetengetriebe gekoppelt, sodass der elektrische Antrieb den zweiten Antrieb beim Antreiben des Hauptrotors und / oder Heckrotors unterstützen kann beziehungsweise umgekehrt und dadurch ein Hybridantrieb ausgebildet wird.

Vorzugsweise ist die Welle beziehungsweise Antriebswelle der erfindungsgemässen Antriebseinheit eine Rotorwelle des erfindungsgemässen Drehflüglers, wobei die Rotorwelle zweiteilig ausgestaltet ist und einen Lagermast sowie einen Aussenmast umfasst, wobei der Aussenmast als Hohlkörper ausgestaltet rotierbar um die zentrische Achse relativ zum Lagermast, den Lagermast konzentrisch umgebend, gelagert ist, und wobei der Aussenmast mit dem als Planetengetriebe ausgestalteten Helikopterrotorgetriebe wirkverbindbar ist, wobei der Lagermast ortsfest und drehfest im Drehflügler lagerbar ist, sodass der Aussenmast drehfest mit einem Hauptrotor koppelbar ist und mit dem als Planetengetriebe ausgestalteten Helikopterrotorgetriebe in Rotation versetzbar ist.

Durch ein solche zweiteilige Ausgestaltung der Antriebswelle beziehungsweise der Rotorwelle kann ein besonders laufruhiger Antrieb eines Hauptrotors erzielt werden. Durch die Aufteilung in Lagermast und Aussenmast wird Druck aus dem umlaufenden Lager genommen, den dann der nicht drehende Teil beziehungsweise der Lagermast übernimmt, so dass ein laufruhiger Antrieb resultiert. Im Weiteren wurde vorteilhaft gefunden, dass während des Antriebs des Hauptrotors eine geringe Umlaufbiegung und dadurch eine geringere Ermüdung auftritt als bei einteiligen Antriebswellen beziehungsweise Rotorwellen. Zusätzlich kann eine äusserst kompakte Anordnung erreicht werden, welcher, beispielsweise in einem Hohlraum des Lagermasts, die Durchführung von Verkabelungen, Steuerstangen zur Anbringung einer oberhalb der Rotorblattkopplungsvorrichtung angeordneten Taumelscheibe, und weiteren Bauteilen von Antriebsstrangseite zur Rotorseite erlaubt. Beispielsweise können hier auch die elektrischen Versorgungsleitungen zur elektrischen Stromversorgung am drehenden System wie beispielsweise Anti-Icing Einrichtungen für die Rotorblätter, Lampen in den Rotorblättern oder elektrische Aktuatoren für ein 'Fly-by-Wire'-System angeordnet sein.

Gemäss einer alternativen, bevorzugten Ausgestaltung des erfindungsgemässen Drehflüglers kann die Welle beziehungsweise Rotorwelle des erfindungsgemässen auch einteilig ausgestaltet sein und dadurch andere Vorteile insbesondere im Zusammenhang mit einer besonders einfachen und kompakten Bauweise bieten.

Vorzugsweise ist die Antriebswelle mit einem Antriebszahnrad drehfest koppelbar, wobei das Antriebszahnrad auf dem Lagermast rotierbar lagerbar ist mittels mindestens eines Radiallagers, und mittels des mit dem Antriebszahnrad drehfest verbundenen, zentralen Sonnenrads eine Rotation von mindestens einem Planetenrad (insbesondere ein unteres Planetenrad bei einem zweistufigen Getriebe) an einer dem Sonnenrad zugewandten Seite eines jeweiligen Planetenradträgers um eine jeweilige Planetenradachse erreicht wird, und wobei mindestens ein Planetenrad (insbesondere dem unteren Planetenrad zugeordnetes oberes Planetenrad bei einem zweistufigen Getriebe) von einem um die zentrische Achse rotierbaren, innenverzahnten Zahnradring umschlossen ist. Zwischen Zahnradring und dem Aussenmast ist der als Kraftübertragungseinrichtung fungierende Zahnradringmitnehmer derart anbringbar beziehungsweise angebracht oder angeformt, so dass ausgehend von einer Rotationsbewegung des Antriebszahnrads der Aussenmast und der mit dem Aussenmast drehfest gekoppelte Hauptrotor in Rotation versetzbar ist.

Bevorzugt umfasst beim erfindungsgemässen Drehflügler die erfindungsgemässe Antriebseinheit eine elektrische Energiequelle, insbesondere eine Batterie-Speichereinheit, wobei der erste Antrieb in Form eines elektrischen Antriebs des erfindungsgemässen Hybridantriebs in einem drehfest gekoppelten Zustand zwischen dem elektrischen Antrieb und dem zweiten, als thermodynamische Kraftmaschine ausgestalteten, Antrieb und während des Betriebs des zweiten Antriebs der mindestens eine, vorzugsweise die Vielzahl der ersten, elektrischen Antriebe als Generator fungieren können für eine zusätzliche Energierückgewinnung für die Batterie-Speichereinheit.

Vorzugsweise ist beim erfindungsgemässen Drehflügler, insbesondere Helikopter, im ersten, elektrischen Antrieb ein Gleichrichter, insbesondere in Form einer Sperrdiode, vorgesehen, wodurch im Nichtbetrieb des elektrischen Antriebs die Batterie-Speichereinheit aufgeladen werden kann.

Bevorzugt ist beim erfindungsgemässen Drehflügler die Logik der Steuereinheit derart ausgestaltet, so dass diese im Weiteren einen automatischen Moduswechsel zwischen der Drehmomenterzeugung zum Antreiben des Rotors und der zusätzlichen Energierückgewinnung für die Batterie-Speichereinheit erlaubt.

### Kurze Beschreibung der Zeichnungen

Bevorzugte Ausführungsbeispiele des Erfindungsgegenstandes werden nachstehend im Zusammenhang mit den anliegenden Zeichnungen beschrieben. Es zeigen:
- Fig. 1a: einen Längsschnitt durch eine erste bevorzugte Ausführungsform der erfindungsgemässen Antriebseinheit mit einem zweistufigen Planetengetriebe als Hybridvariante, insbesondere zum Antreiben des Hauptrotors eines Drehflüglers;
- Fig. 1b: eine Draufsicht auf die erste bevorzugte Ausführungsform der erfindungsgemässen Antriebseinheit mit angebrachtem Getriebegehäuse;
- Fig. 1c: eine perspektivische Ansicht der ersten bevorzugten Ausführungsform der erfindungsgemässen Antriebseinheit ohne Getriebegehäuse;
- Fig. 1d: eine perspektivische Ansicht der ersten bevorzugten Ausführungsform der erfindungsgemässen Antriebseinheit mit Getriebegehäuse;
- Fig. 2a: einen Längsschnitt durch eine zweite bevorzugte Ausführungsform der erfindungsgemässen Antriebseinheit mit einem zweistufigen Planetengetriebe als Hybridvariante mit einem innenliegenden, aussenverzahnten Zahnradring;
- Fig. 2b: eine Draufsicht auf die zweite bevorzugte Ausführungsform der erfindungsgemässen Antriebseinheit mit angebrachtem Getriebegehäuse;
- Fig. 2c: eine perspektivische Ansicht der zweiten bevorzugten Ausführungsform der erfindungsgemässen Antriebseinheit ohne Getriebegehäuse;
- Fig. 2d: eine perspektivische Ansicht der zweiten bevorzugten Ausführungsform der erfindungsgemässen Antriebseinheit mit Getriebegehäuse;
- Fig. 3a: einen Längsschnitt durch eine dritte bevorzugte Ausführungsform der erfindungsgemässen Antriebseinheit mit einem einstufigen Planetengetriebe als vollelektrische Antriebsvariante, insbesondere zum Antreiben des Hauptrotors eines Drehflüglers;
- Fig. 3b: eine Draufsicht auf die dritte bevorzugte Ausführungsform der erfindungsgemässen Antriebseinheit mit angebrachtem Getriebegehäuse;
- Fig. 3c: eine perspektivische Ansicht der dritten bevorzugten Ausführungsform des erfindungsgemässen Antriebseinheit ohne Getriebegehäuse;
- Fig. 3d: eine perspektivische Ansicht der zweiten bevorzugten Ausführungsform des erfindungsgemässen Antriebseinheit mit Getriebegehäuse;
- Fig. 4a: einen Längsschnitt durch eine vierte bevorzugte Ausführungsform des erfindungsgemässen Antriebseinheit mit einem einstufigen Planetengetriebe als vollelektrische Antriebsvariante sowie mit einem innenliegenden, aussenverzahnten Zahnradring, insbesondere zum Antreiben des Hauptrotors eines Drehflüglers;
- Fig. 4b: eine Draufsicht auf die vierte bevorzugte Ausführungsform der erfindungsgemässen Antriebseinheit mit angebrachtem Getriebegehäuse;
- Fig. 4c: eine perspektivische Ansicht der vierten bevorzugten Ausführungsform der erfindungsgemässen Antriebseinheit ohne Getriebegehäuse;
- Fig. 4d: eine perspektivische Ansicht der vierten bevorzugten Ausführungsform der erfindungsgemässen Antriebseinheit mit Getriebegehäuse;
- Fig. 5a: ein Längsschnitt durch eine fünfte bevorzugte Ausführungsform der erfindungsgemässen Antriebseinheit mit einem einstufigen Planetengetriebe als vollelektrische Antriebsvariante sowie als Aussenläufervariante;
- Fig. 5b: eine Draufsicht auf die fünfte bevorzugte Ausführungsform der erfindungsgemässen Antriebseinheit mit angebrachtem Getriebegehäuse;
- Fig. 5c: eine perspektivische Ansicht der fünften bevorzugten Ausführungsform der erfindungsgemässen Antriebseinheit ohne Getriebegehäuse;
- Fig. 5d: eine perspektivische Ansicht der fünften bevorzugten Ausführungsform der erfindungsgemässen Antriebseinheit mit Getriebegehäuse;
- Fig. 6: ein Funktionsblockbild der Antriebsleistungssteuerung der in den Planeten integrierten, ersten Antriebe der bevorzugten Ausführungsformen der erfindungsgemässen Antriebseinheit.

### Beschreibung

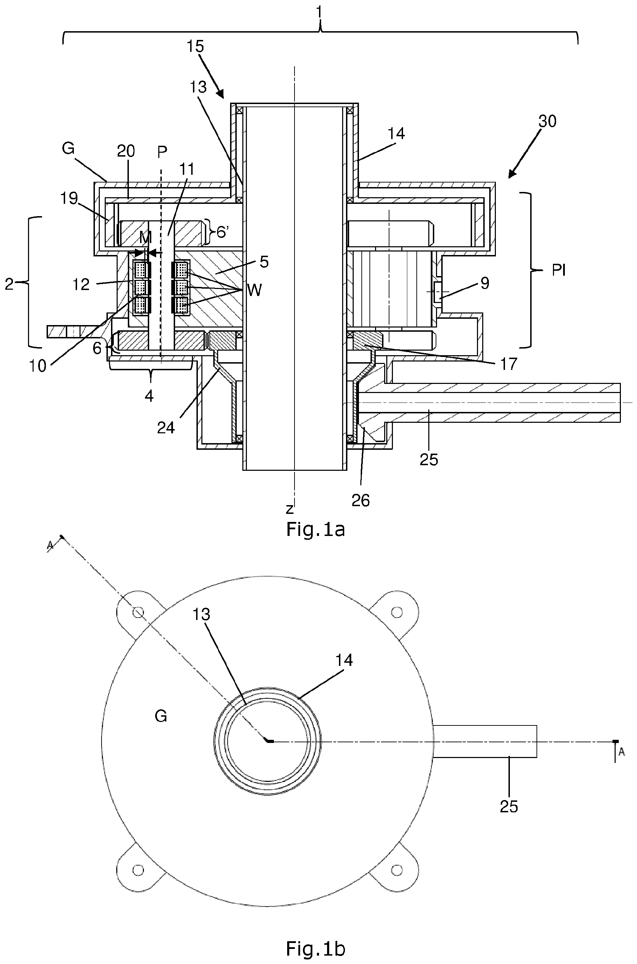

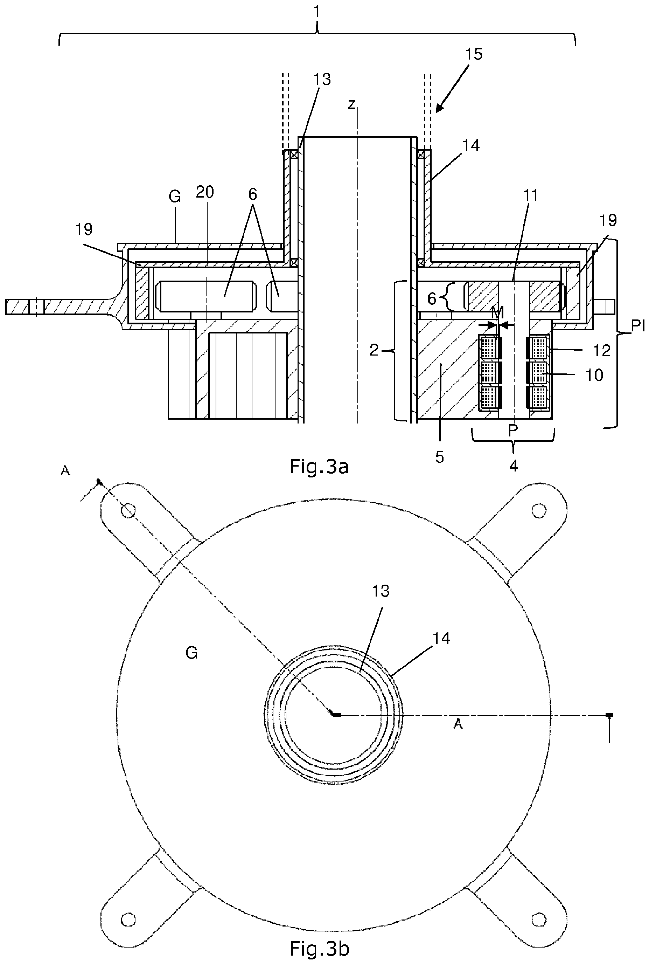

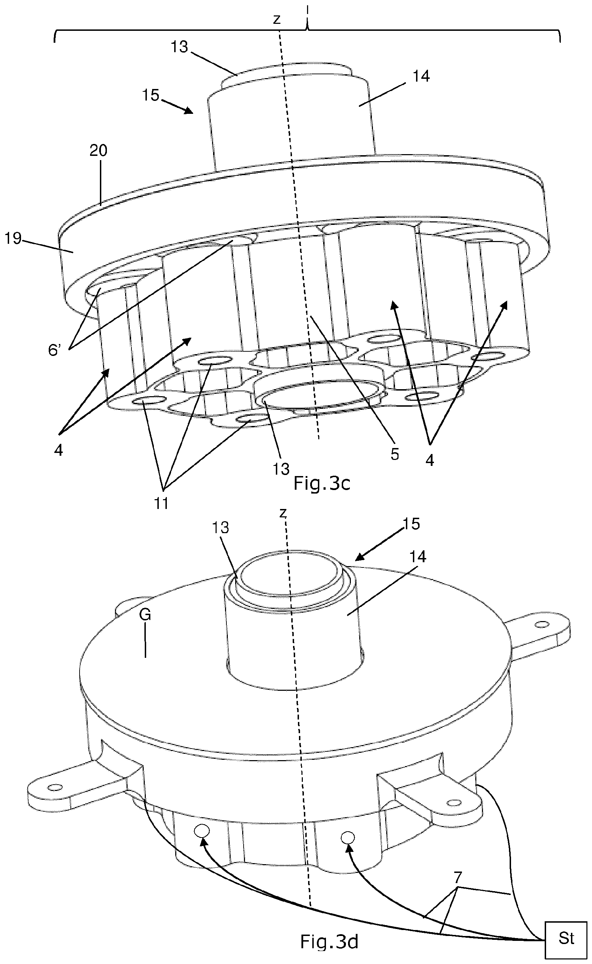

**Fig.1a** zeigt einen Längsschnitt entlang A-A (siehe Fig.1b) durch eine erste bevorzugte Ausführungsform der erfindungsgemässen Antriebseinheit 1 mit einem mehrstufigen, hier zweistufigen, Planetengetriebe PI, beispielsweise zum Antreiben eines hier nicht gezeigten Hauptrotors eines Drehflüglers (siehe hierzu insbesondere Fig. 3).

Die hier als zweistufiges Planetengetriebe PI ausgestaltete, erfindungsgemässe Antriebseinheit 1 umfasst ein zentrales Sonnenrad 17 und mehrere an einer hier nicht gezeigten Aussenverzahnung des Sonnenrads 17 anliegende Planeten 4. Das Sonnenrad 17 wird von den anliegenden Planeten 4 umschlossen, wobei die Planeten 4 konzentrisch zum Sonnenrad 17 und einer zentrischen Achse z innerhalb des Planetengetriebes PI angeordnet sind. Ein Planet 4 umfasst hierbei ein unteres Planetenrad 6, ein oberes Planetenrad 6' und ein die Planetenräder 6; 6' drehfest verbindender Innenläuferteil 11 zur Ausbildung zweier Stufen des hier zweistufigen Planetengetriebes PI, sowie ein Ständerteil 12.

Die hier gezeigte, erste bevorzugte Ausführungsform weist eine Welle 15 auf, welche zweiteilig ausgestaltet ist umfassend einen Lagermast 13 sowie einen Aussenmast 14. Über den Aussenmast 14 beziehungsweise die Welle 15 kann beispielsweise der Hauptrotor eines Drehflüglers oder eine Schiffsschraube oder dergleichen angetrieben werden. Die erfindungsgemässe, die Welle 15 antreibende, Antriebseinheit 1 ist in den verschiedensten technischen Gebieten anwendbar. Mit anderen Worten kann das Getriebe beziehungsweise Planetengetriebe PI der erfindungsgemässen Antriebseinheit auch als Drehmomentgebergetriebe 30 aufgefasst werden.

Auf Höhe beziehungsweise in derselben, axialen Position der oberen Planetenräder 6' ist ein Zahnradring 19 rotierbar um die zentrische Achse z angeordnet. Der Zahnradring 19 umschliesst alle oberen Planetenräder 6', ist durch die Rotation der oberen Planetenräder 6' antreibbar und damit um die zentrische Achse z rotierbar. Am Zahnradring 19 ist eine hier nicht gezeigte Innenverzahnung angeordnet, welche mit einer hier nicht gezeigten Aussenverzahnung der oberen Planetenräder 6' (wenn wie hier in Fig.1a gezeigt in zweistufiger Form ausgeführt) in Eingriff ist.

Eine mechanische Wirkverbindung zwischen den oberen Planetenrädern 6'und einem um die zentrische Achse z rotierbaren Aussenmast 14 ist vorhanden zum Antreiben dieses Aussenmasts 14 der Welle 15. Bei der vorliegenden, ersten bevorzugten Ausführungsform wird diese mechanische Wirkverbindung anhand eines drehfest mit dem Aussenmast 14 verbundenen Zahnradringmitnehmers 20 realisiert. Mit anderen Worten fungiert hier der Zahnradringmitnehmer 20, der ebenfalls am Zahnradring 19 angeordnet ist, als Kraftübertragungseinheit, mittels welchem die Rotation des Zahnradringes 19 auf den drehbaren Aussenmast 14 übertragbar ist.

Wie in Fig.1a ersichtlich ist in mindestens einen Planeten 4 ein erster, elektrischer Antrieb 2, hier insbesondere ein elektrischer Synchronmotor 10 mit Innenläuferteil 11, zur Bildung einer ersten Antriebseinheit 1 integriert, so dass die Welle 15 durch den ersten Antrieb 2 in Rotation versetzbar ist. Ein als Stator des Synchronmotors 10 fungierender, hier im Wesentlichen ringförmiger und mit Wicklungen W versehener Ständerteil 12 ist hier im Planetenradträger 5 aufgenommen und fest mit dem Planetenradträger 5 verbunden. Der als Rotor des Synchronmotors 10 fungierende, stiftförmige Innenläuferteil 11 ist drehfest mit den oberen und unteren Planetenrädern 6; 6' verbunden. Der Planet 4 ist mittels Planetenradträger 5 innerhalb des Planetengetriebes PI mit dem Sonnenrad 17 und der rotierbaren Welle 15 wirkverbunden und hier ortsfest gehalten.

Beim in Fig. 1a gezeigten elektrischen Synchronmotor 10 entsteht die Kraftwirkung Synchronmotor 10 im Luftspalt beziehungsweise Magnetspalt M zwischen Ständerteil 12 (Stator) und Innenläuferteil 11 (Rotor).

Wie in Fig. 1a ersichtlich ist mit einem Antriebszahnrad 24 ein als Hohlwelle ausgebildetes Sonnenrad 17 verbunden, wobei das Sonnenrad 17 eine hier nicht gezeigte Aussenverzahnung aufweist. Das Sonnenrad 17 und das Antriebszahnrad 24 sind rotierbar um die zentrische Achse z am Lagermast 13 angebracht. Mittels des Sonnenrads 17 ist über das untere Planetenrad 6 eine Rotation des Planetenrads 6' um eine jeweilige Planetenradachse P erreichbar.

Das Antriebszahnrad 24 ist wiederum in Wirkverbindung mit mindestens einem Antriebsstrang 25 über ein Antriebsstrangzahnrad 26. Vorzugsweise steht hier der Antriebsstrang 25 mit einem hier nicht gezeigten, weiteren als thermodynamische Kraftmaschine ausgestalteten Antrieb TK in einer mechanischen Wirkverbindung zur Ausbildung eines Hybridantriebs beziehungsweise einer Hybridvariante umfassend die erfindungsgemässe Antriebseinheit 1.

Im Folgenden wird beispielhaft die Anwendung der Hybridvariante gemäss der ersten bevorzugten Ausführungsform einer Antriebseinheit 1 zum Antreiben des Hauptrotors eines Drehflüglers beschrieben (wobei sich die zweiten bis fünften bevorzugten Ausführungsformen genauso zum Antreiben des Hauptrotors eines Drehflüglers eignen):
Dabei kann das Drehmomentgebergetriebe 30 der erfindungsgemässen Anstriebseinheit 1 hier ein als Planetengetriebe PI ausgestaltetes Hauptrotorgetriebe beziehungsweise Helikopterrotorgetriebe eines Drehflüglers aufgefasst werden.

Die Welle 15 beziehungsweise hier Rotorwelle ist zweiteilig ausgestaltet umfassend einen Lagermast 13 sowie einen Aussenmast 14.

Das Helikopterrotorgetriebe weist einen zentralen Hohlraum auf. In diesem zentralen Hohlraum ist der hier ortsfeste und drehfeste Lagermast 13 gelagert. Die zentrische Achse z bildet gleichzeitig die Längsrichtung des Lagermastes 13 und eine Rotationsachse des Aussenmastes 14.

Eine mechanische Wirkverbindung zwischen den hier ortfesten und um ihre Planetenradachse P rotierbar gelagerten Planetenrädern 6;6' und einer um die zentrische Achse z rotierbaren Welle 15, d.h. umfassend hier einen Lagermast 13 sowie einen rohrförmigen, den Lagermast 13 umschliessenden Aussenmast 14, wird verwirklicht, indem die ortsfesten oberen Planetenräder 6' von einem um die zentrische Achse z rotierbaren innenverzahnten Zahnradring 19 umschlossen und der Zahnradring 19 derart rotierbar ist, so dass der Aussenmast 14 der Welle 15 mittels eines am Zahnradring 19 und am Aussenmast 14 befestigten Zahnradringmitnehmers 20 in Rotation versetzbar ist.

Wie in Fig.1a ersichtlich ist in mindestens einen Planeten 4 ein erster, elektrischer Antrieb 2, hier insbesondere ein elektrischer Synchronmotor 10 mit Innenläuferteil 11, zur Bildung einer ersten Antriebseinheit 1 integriert, so dass der Aussenmast 14 der Welle 15 durch den ersten Antrieb 2 in Rotation versetzbar ist. Ein als Stator des Synchronmotors 10 fungierender Ständerteil 12 ist hier in den Planetenradträger 5 aufgenommen und mit dem Planetenträger fest verbunden, während der als Rotor des Synchronmotors 10 fungierende, stiftförmige Innenläuferteil 11 drehfest mit den oberen und unteren Planetenrädern 6; 6' verbunden ist.

Die in den Fig.1a bis 1d gezeigte, für einen Drehflügler bzw. Helikopter geeignete, erste bevorzugte Ausführungsform der erfindungsgemässen Antriebseinheit 1 hat im Rahmen dieser Verwendung insbesondere Sicherheitsvorteile. In einem Notfall in Form eines Ausfalls eines Antriebs eines solchen mehrmotorigen Helikopters muss der Helikopter für eine vorbestimmte Dauer auf die Leistung von dem weiteren verbleibenden Motor verlassen können, um den Helikopter in ein sicheres Flugregime zu versetzen und auf den Motorausfall zu reagieren.

Vorzugsweise steht auch bei der in Fig.1a gezeigten, ersten bevorzugten Ausführungsform der Antriebsstrang 25 mit einem hier nicht gezeigten, weiteren als thermodynamische Kraftmaschine ausgestalteten Antrieb TK in einer mechanischen Wirkverbindung zur Ausbildung eines Hybridantriebs. Dabei kann nebst einem als thermodynamische Kraftmaschine ausgestalteten, zweiten Antrieb TK durch einen ersten, hier elektrischen, Antrieb 2 sowie eine zugehörige elektrische Energiequelle zusätzliche, mechanische Arbeit verrichtet werden. Solche Helikopter mit einem Hybridantrieb bieten vorteilhaft einen zusätzlichen Sicherheitsvorteil gegenüber zweimotorigen Helikoptern einzig mit fossiler Brennstoffversorgung, da beispielsweise bei Ausfall der fossilen Brennstoffversorgung auf die zusätzliche elektrische Energieversorgung zurückgegriffen werden kann.

Durch die Integration des ersten Antriebs 2, insbesondere des elektrischen Synchronmotors, in die Planeten 4 wird ein ausgesprochen kompakter Hybridantrieb bei einem zweimotorigen Helikopter (beispielsweise in Sinne eines dissimilaren Helikopters) erzielt.

Wie in Fig.1a ersichtlich ist hier der Lagermast als Hohlkörper ausgestaltet, so dass Bauteile, wie Steuerstangen zur Anbringung einer oberhalb der Rotorblattkopplungsvorrichtung angeordneten Taumelscheibe und/ oder Verkabelung, den Lagermast 13 und den Aussenmast 14 in Richtung zentrischer Achse z durchquerend angeordnet werden können. Beispielsweise können hier auch die elektrischen Versorgungsleitungen zur elektrischen Stromversorgung am drehenden System wie beispielsweise Anti-Icing Einrichtungen für die Rotorblätter, Lampen in den Rotorblättern oder elektrische Aktuatoren für ein 'Fly-by-Wire'-System angeordnet sein.

Von hier an und im Folgenden bezeichnen gleiche Referenzzeichen gleiche Komponenten in den Figuren.

**Fig.1b** zeigt eine Draufsicht auf die erste bevorzugte Ausführungsform der erfindungsgemässen Antriebseinheit 1 mit angebrachtem Getriebegehäuse G.

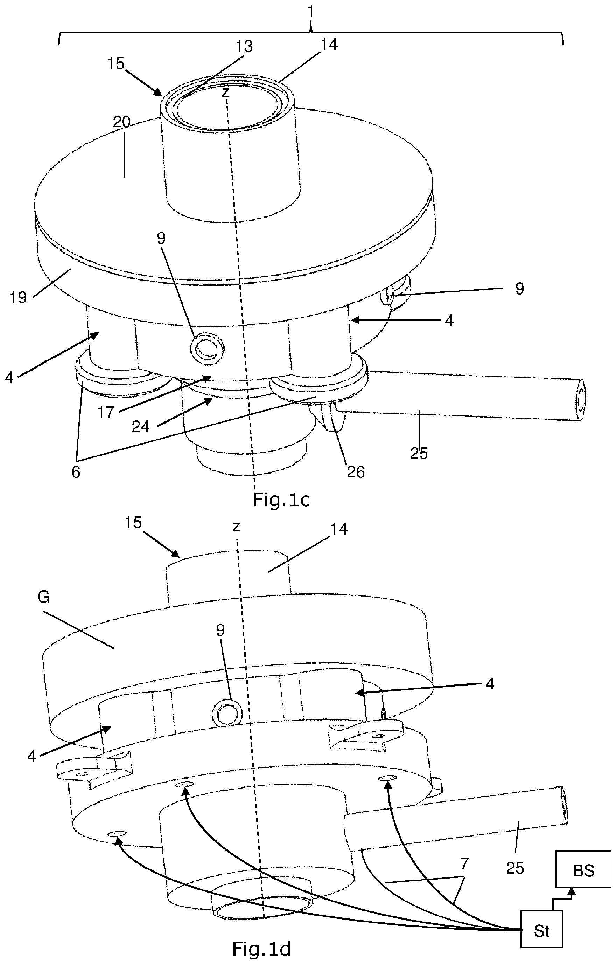

**Fig.1c** zeigt eine perspektivische Ansicht der ersten bevorzugten Ausführungsform der erfindungsgemässen Antriebseinheit 1 ohne beziehungsweise mit entferntem Gehäuse. Die in Fig. 1c gezeigte, erste bevorzugte Ausführungsform weist hier beispielhaft vier Planeten 4 auf.

**Fig.1d** zeigt eine perspektivische Ansicht der ersten bevorzugten Ausführungsform der erfindungsgemässen Antriebseinheit 1 mit einem Gehäuse G. Dabei umfasst die Antriebseinheit 1 eine Steuereinheit ST, welche derart ausgestaltet ist, um die in den Planeten 4 integrierten, ersten Antriebe 2 miteinander zu synchronisieren. Diese Synchronisation der in den Planeten 4 integrierten, ersten Antriebe 2 wird in Fig.6 genauer erläutert.

Des Weiteren können diese in den Planeten integrierten Antriebe 2 mechanisch, elektrisch oder hydraulisch jeweils mittels einer hier nicht gezeigten, geeigneten Kupplung voneinander entkoppelbar ausgestaltet sein, um eine mögliche Blockierung des Getriebes durch eine Fehlfunktion eines oder mehrerer Antriebe zu verhindern.

Im Weiteren umfasst hier gemäss Fig.1d die Antriebseinheit 1 eine elektrische Energiequelle, insbesondere eine hier gezeigte Batterie-Speichereinheit BS, und wobei der erste Antrieb 2 in Form eines hier elektrischen Antriebs des Hybridantriebs in einem drehfest gekoppelten Zustand zwischen dem ersten, hier elektrischen, Antrieb 2 und dem zweiten, als thermodynamische Kraftmaschine ausgestalteten, Antriebs TK. Während des Betriebs des zweiten Antriebs TK kann der erste, hier elektrische, Antrieb 2 als Generator fungieren und für eine zusätzliche Energierückgewinnung für die Batterie-Speichereinheit BS sorgen.

Vorzugsweise im ersten, insbesondere elektrischen, Antrieb 2, insbesondere dem elektrischen Synchronmotor mit Innenläuferteil 11, ist ein Gleichrichter, insbesondere in Form einer Sperrdiode, vorgesehen, wodurch im Nichtbetrieb des elektrischen Antriebs die Batterie-Speichereinheit BS aufgeladen werden kann.

Zudem kann die Steuereinheit ST im Weiteren mit einer Logik versehen sein, die einen automatischen Moduswechsel zwischen der Drehmomenterzeugung zum Antreiben des Hauptrotors und der zusätzlichen Energierückgewinnung für die Batterie-Speichereinheit BS erlaubt.

Die in den Fig.1a bis 1d gezeigte, erste bevorzugte Ausführungsform zeigt mit anderen Worten eine Hybridvariante umfassend die erfindungsgemässe Antriebseinheit 1. Aufgrund der Ausbildung als zweistufiges Planetengetriebe PI kann vorteilhaft eine optimale höhere Übersetzung eingestellt werden, während gleichzeitig die Vorteile eines Hybridantriebs (beispielsweise Sicherheitsvorteile bei Anwendung in einem Drehflügler) erzielt werden.

Gemäss einer bevorzugten Weiterbildung der vorliegenden Erfindung kann das Planetengetriebe auch mehr als zweistufig, z.B. dreistufig etc., ausgestaltet sein.

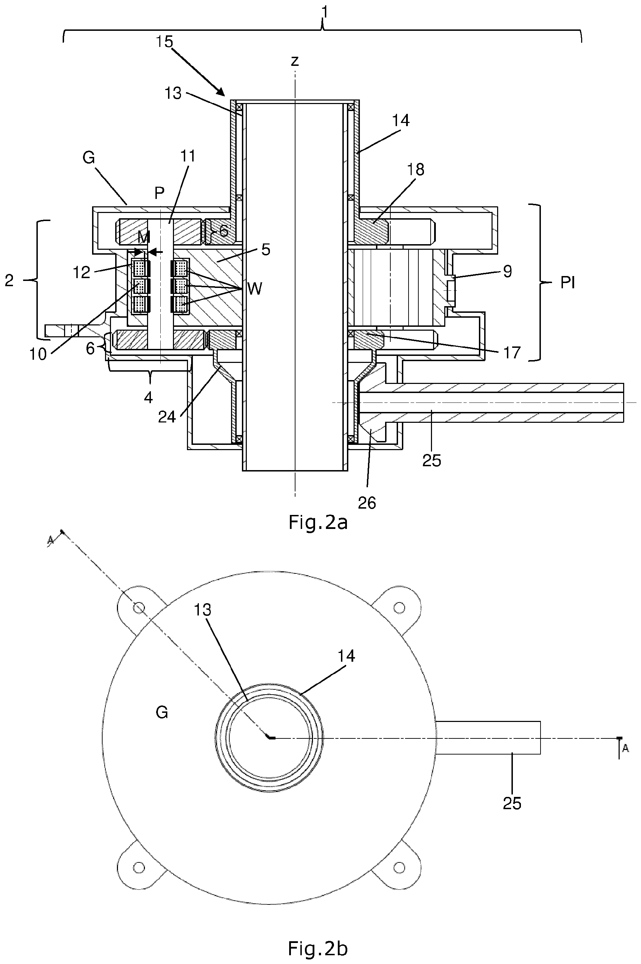

**Fig. 2a** zeigt einen Längsschnitt entlang A-A (siehe Fig.2b) durch eine zweite bevorzugte Ausführungsform der erfindungsgemässen Antriebseinheit 1 mit einem zweistufigen Planetengetriebe PI als Hybridvariante mit einem innenliegenden, aussenverzahnten Zahnradring 18.

Die hier als zweistufiges Planetengetriebe PI ausgestaltete, erfindungsgemässe Antriebseinheit 1 umfasst ein zentrales Sonnenrad 17 und mehrere an einer hier nicht gezeigten Aussenverzahnung des Sonnenrads 17, das Sonnenrad 17 umschliessend anliegende Planeten 4, wobei Planeten 4 konzentrisch zum Sonnenrad 17 und einer zentrischen Achse z innerhalb des Planetengetriebes PI angeordnet sind.

Wie in Fig.2a gezeigt wird hier ein innenliegender, aussenverzahnter sowie mit dem Aussenmast 14 drehfest verbundener Zahnradring 18 von den oberen Planetenrädern 6' umschlossen und ist ebenso durch die Rotation der oberen Planetenräder 6' antreibbar, damit um die zentrische Achse z rotierbar und zusammen mit dem Aussenmast 14 in Rotation versetzbar. Am Zahnradring 18 ist eine hier nicht gezeigte Aussenverzahnung angeordnet, welche mit einer hier nicht gezeigten Aussenverzahnung der oberen Planetenräder 6' in Eingriff ist.

**Fig.2b** zeigt eine Draufsicht auf die zweite bevorzugte Ausführungsform der erfindungsgemässen Antriebseinheit 1 mit angebrachtem Getriebegehäuse G.

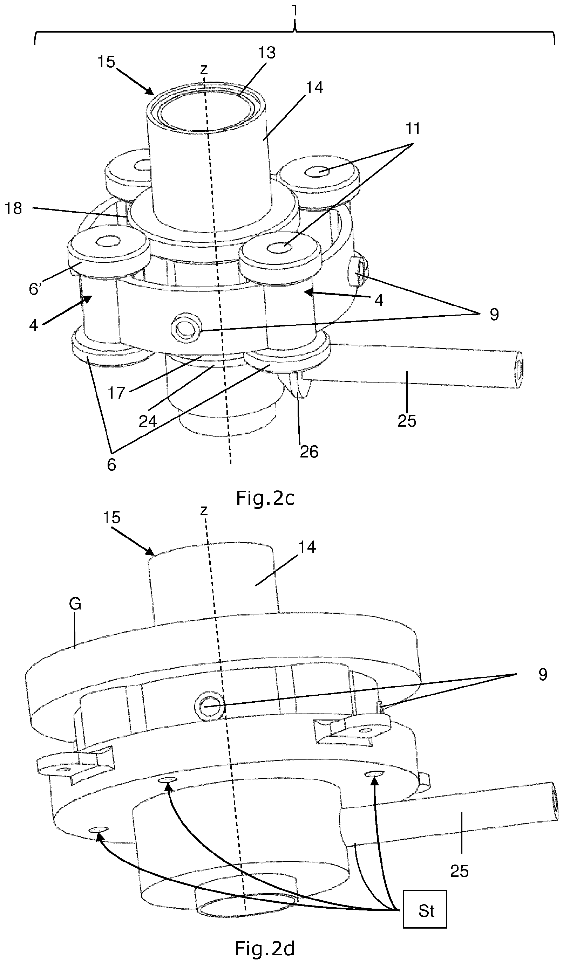

**Fig.2c** zeigt eine perspektivische Ansicht der zweiten bevorzugten Ausführungsform der erfindungsgemässen Antriebseinheit ohne Getriebegehäuse.

**Fig.2d** zeigt eine perspektivische Ansicht der zweiten bevorzugten Ausführungsform der erfindungsgemässen Antriebseinheit mit Getriebegehäuse G.

**Fig.3a** zeigt einen Längsschnitt entlang A-A (siehe Fig.3b) durch eine dritte bevorzugte Ausführungsform der erfindungsgemässen Antriebseinheit 1 mit einem einstufigen Planetengetriebe PI, beispielsweise zum Antreiben eines hier nicht gezeigten Hauptrotors eines Drehflüglers.

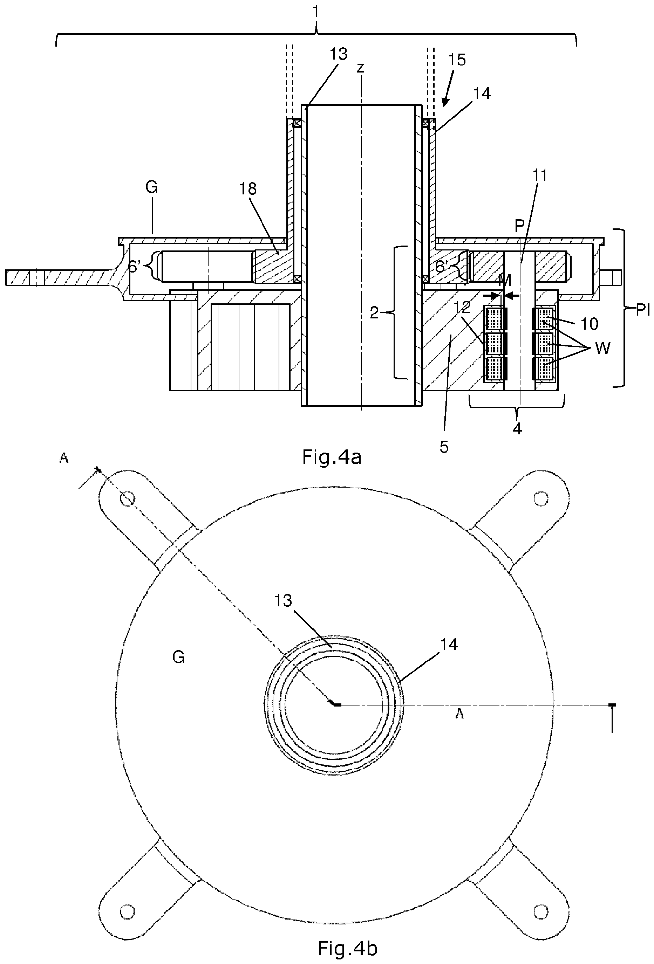

Wie in Fig.3a ersichtlich kann bei der hier gezeigten dritten bevorzugten Ausführungsform auf ein Sonnenrad verzichtet werden (wie auch bei den in Fig.4a bis 4d gezeigten, vierten beziehungsweise bei den in Fig.5a bis 5d gezeigten, fünften bevorzugten Ausführungsformen), was somit einem Planetengetriebe PI verwandten Getriebe entspricht. Dieser mögliche Verzicht auf ein Sonnenrad hat den Vorteil einer Gewichtsreduktion sowie einer Minderung der Komplexität.

Die Verwendung eines solchen einstufigen Planetengetriebes PI hat den Vorteil, dass bei der hier gezeigten, dritten bevorzugten Ausführungsform kein äusseres, sich über zwei Stufen erstreckendes Getriebegehäuse G angebracht werden muss und dadurch der in den Planeten 4 integrierte, erste, hier als elektrischer Synchronmotor 10 mit Innenläuferteil 11 ausgestaltete, Antrieb 2 besser gekühlt werden kann. Insbesondere werden bis zu einer bestimmten Leistungsgrösse die Wärmeverluste klein genug sein, um einen Flüssigkeitskühlkreislauf zu umgehen, und deshalb ist hierdurch keine Flüssigkühlung notwendig, d.h. die vorhandene Luftkühlung durch die Umgebungsluft um die Planeten 4 bewirkt bereits eine ausreichende Kühlung. Zudem hat sich gezeigt, dass bei einem modularen Aufbau des elektrischen Antriebs auf mehrere Stufen mit niedriger elektrischer Leistung die Leistungsgrösse ohne notwendige Flüssigkühlung höher ist als bei einem einzigen, elektrischen Antrieb.

**Fig.3b** zeigt eine Draufsicht auf die dritte bevorzugte Ausführungsform der erfindungsgemässen Antriebseinheit mit angebrachtem Getriebegehäuse G.

**Fig.3c** zeigt eine perspektivische Ansicht der dritten bevorzugten Ausführungsform der erfindungsgemässen Antriebseinheit 1 ohne beziehungsweise mit entferntem Gehäuse. Die hier gezeigte, dritte bevorzugte Ausführungsform weist beispielhaft sechs Planeten 4 auf.

**Fig.3d** zeigt eine perspektivische Ansicht der dritten bevorzugten Ausführungsform der erfindungsgemässen Antriebseinheit 1 mit Getriebegehäuse G.

Die Fig.3a bis 3d betreffend die dritte bevorzugte Ausführungsform mit einem einstufigen Planetengetriebe PI zeigen eine vollelektrische Variante des erfindungsgemässen Antriebseinheit 1, wobei ebenfalls eine Hybridvariante umfassend eine als einstufiges Planetengetriebe PI ausgestalteten Antriebseinheit 1 möglich ist. Unter einem einstufigen Planetengetriebe PI wird verstanden, dass die Planeten 4 nur ein oberes Planetenrad 6' umfassen und damit lediglich eine Stufe aufweisen.

Grundsätzlich ist zudem eine noch einfachere Ausführungsform des erfindungsgemässen Antriebs denkbar, wobei das Drehmoment statt über einen innenverzahnten Zahnradring 19 durch einen aussenverzahnten Zahnradring 18 übertragen werden kann (siehe Fig.2a bis 2d beziehungsweise Fig.4a bis 4d).

**Fig.4a** zeigt einen Längsschnitt durch eine vierte bevorzugte Ausführungsform des erfindungsgemässen Antriebseinheit 1 mit einem einstufigen Planetengetriebe als vollelektrische Antriebsvariante ausgebildet sowie mit einem innenliegenden, aussenverzahnten Zahnradring, insbesondere zum Antreiben des Hauptrotors eines Drehflüglers.

Wie in **Fig.4a** gezeigt wird hier ein innenliegender, aussenverzahnter sowie mit dem Aussenmast 14 drehfest verbundener Zahnradring 18 von den oberen Planetenrädern 6' umschlossen und ist ebenso durch die Rotation der oberen Planetenräder 6' antreibbar und zusammen mit dem Aussenmast 14 um die zentrische Achse z rotierbar.

**Fig.4b** zeigt eine Draufsicht auf die vierte bevorzugte Ausführungsform der erfindungsgemässen Antriebseinheit mit angebrachtem Getriebegehäuse G.

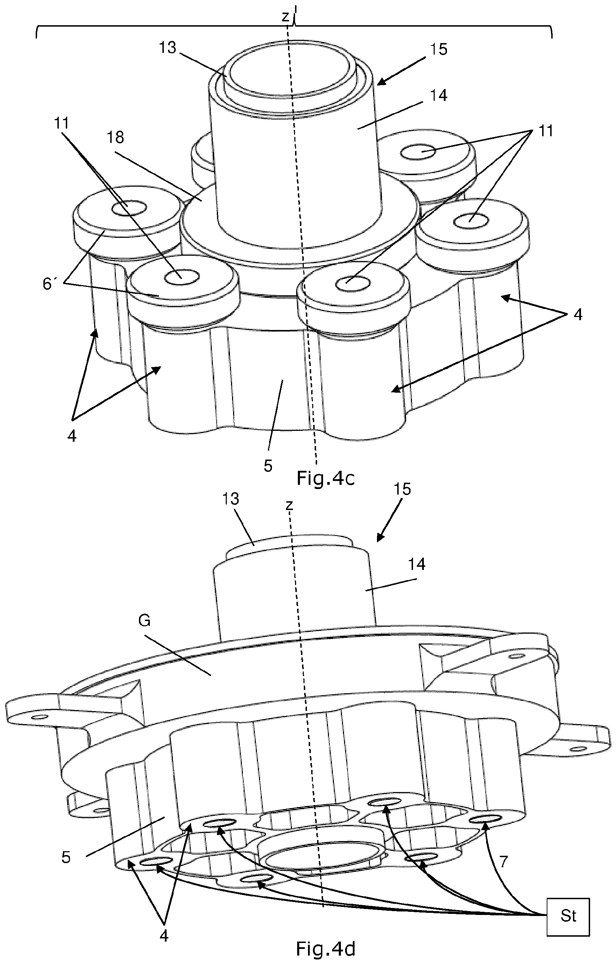

**Fig.4c** zeigt eine perspektivische Ansicht der vierten bevorzugten Ausführungsform der erfindungsgemässen Antriebseinheit ohne Getriebegehäuse.

**Fig.4d** zeigt eine perspektivische Ansicht der vierten bevorzugten Ausführungsform der erfindungsgemässen Antriebseinheit mit Getriebegehäuse G.

**Fig.5a** zeigt einen Längsschnitt entlang A-A (siehe Fig.5b) durch eine fünfte bevorzugte Ausführungsform der erfindungsgemässen Antriebseinheit 1 mit einem einstufigen Planetengetriebe PI als vollelektrische Antriebsvariante sowie als Aussenläufervariante ausgebildet.

Wie in Fig.5a ersichtlich ist in mindestens einen Planeten 4 ein erster, hier elektrischer, Antrieb 2, hier insbesondere ein elektrischer Synchronmotor 10 mit Aussenläuferteil 16, integriert zur Bildung einer ersten Antriebseinheit 1.

Ein als Stator des Synchronmotors 10 fungierender, hier im Wesentlichen ringförmiger und mit Wicklungen W versehener, ruhender Ständerteil 12 ist hier in einem stiftförmigen Element S aufgenommen und fest mit dem stiftförmigen Element S verbunden, während der hier als Rotor des Synchronmotors 10 fungierende, Aussenläuferteil 16 des elektrischen Synchronmotors hier drehfest mit dem Planetenrad 6 verbunden ist. Das Planetenrad 6 und der Aussenläuferteil 16 des elektrischen Synchronmotors 10 liegen hier in der gleichen Ebene beziehungsweise in derselben axialen Position und bilden im Wesentlichen eine Einheit.

Wie in Fig.5a ersichtlich sind hier die ortsfesten Planetenräder 6' der Planeten 4 einerseits von einem um die zentrische Achse z rotierbaren innenverzahnten Zahnradring 19 umschlossen, und andererseits ein innenliegender, aussenverzahnter Zahnradring 18 von den Planetenrädern 6' umschlossen, wobei über den innenverzahnten Zahnradring 19 ein hier nicht gezeigter Aussenmast 14 in Rotation versetzbar ist (siehe Fig.5b) und über den innenliegenden, aussenverzahnten Zahnradring 18 eine weitere hier nicht gezeigt, zentrale Antriebswelle in Rotation versetzbar ist (siehe Fig.5b). Mit anderen Worten sind anhand der fünften bevorzugten Ausführungsform zwei Wellen in Rotation versetzbar mit unterschiedlicher Übersetzung. Zudem ist in Fig.5a angedeutet, dass im Falle einer hier ebenfalls möglichen Ausgestaltung einer Hybridvariante der aussenverzahnte Zahnradring 18 als Sonnenrad 17 fungieren kann.

**Fig.5b** zeigt eine Draufsicht auf die fünfte bevorzugte Ausführungsform der erfindungsgemässen Antriebseinheit 1 mit angebrachtem Getriebegehäuse G sowie in Wirkverbindung mit einem Aussenmast 14 beziehungsweise einer zentralen Antriebswelle 27. Wie in Fig.5b ersichtlich kann der innenverzahnte Zahnradring 19 über eine Vielzahl von Verbindungselementen V mit dem Aussenmast 14 beziehungsweise der Welle 15 in Wirkverbindung stehen. Alternativ oder zusätzlich kann der aussenverzahnte Zahnradring 18 beziehungsweise das Sonnenrad 17 über eine Vielzahl von Verbindungselementen V mit einer zentralen Antriebswelle 27 in Wirkverbindung stehen, insbesondere als Ausgestaltung einer Hybridvariante.

Im Weiteren ist in Fig.5b angedeutet, dass im Falle der Ausgestaltung als Nicht-Hybridvariante beziehungsweise vollelektrische Antriebvariante in Sinne einer weiteren bevorzugten Weiterbildung der innenliegende, aussenverzahnte Zahnradring 18 mit dem Aussenmast in Wirkverbindung stehen kann.

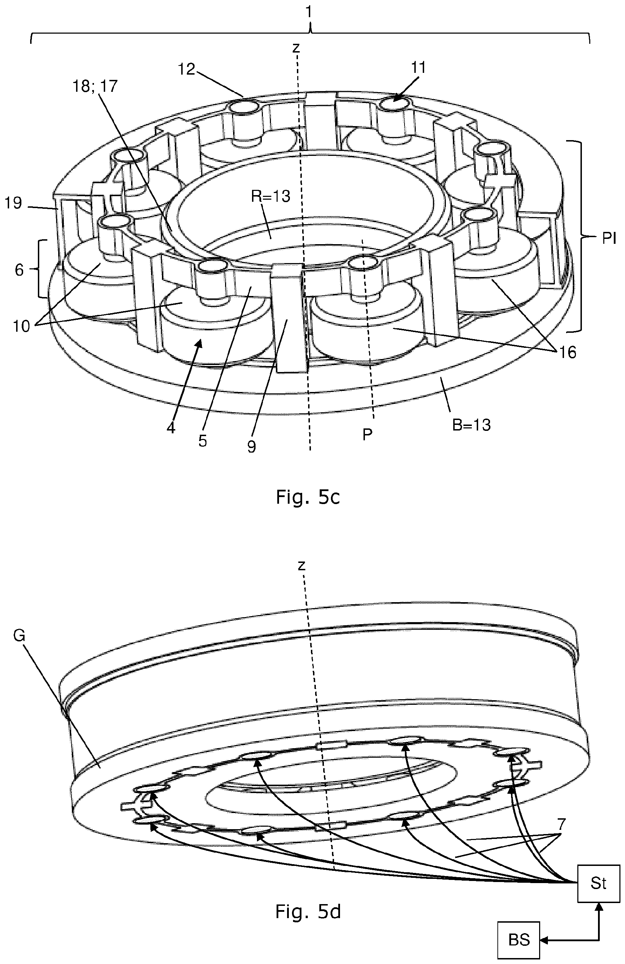

**Fig.5c** zeigt eine perspektivische Ansicht der fünften bevorzugten Ausführungsform der erfindungsgemässen Antriebseinheit 1 ohne Getriebegehäuse, zentrale Antriebswelle und Aussenmast. Wie in Fig.5c ersichtlich ist hier der Planetenradträger 5 über die Tragarme 9 mit einem als Lagermast 13 fungierenden Bodenelement B drehfest und ortsfest verbunden. Zudem umfasst hier der Lagermast 13 ein mittig, koaxial zur zentrischen Achse z angeordnetes Rohrelement R für eine am Zahnradring 18 befestigte, weitere Welle.

Zudem ist in Fig.5c ersichtlich, dass hier Planetenradträger 5 als ein einziges zusammenhängendes, im Wesentlichen ringförmiges Bauteil ausgestaltet ist, in welchem die Planeten 4 ortsfest gehalten werden.

**Fig.5d** zeigt eine perspektivische Ansicht der fünften bevorzugten Ausführungsform der erfindungsgemässen Antriebseinheit 1 mit Getriebegehäuse G, jedoch ohne zentrale Antriebswelle und ohne Aussenmast. Wie in Fig.5d ersichtlich dienen hier die Tragarme 9 gleichzeitig der Befestigung des Getriebegehäuses G.

Die in den Fig.5a bis 5d gezeigte, fünfte bevorzugte Ausführungsform der erfindungsgemässen Antriebseinheit 1 weist eine besonders kompakte Bauform auf, bei welcher der anbringbare, rotierende Aussenmast 14 an den aussenverzahnten Zahnradring 18 oder an den innenverzahnten Zahnradring 19 derart verkürzt ausgestaltbar ist, dass diese sich im Wesentlichen auf derselben axialen Position wie die Planeten 4 anbringbar ist. Im Falle der Anwendung für einen Drehflügler wäre die Antriebseinheit 1 grundsätzlich direkt in der Rotorebene anbringbar.

**Fig.6** zeigt ein Funktionsblockbild der Antriebsleistungssteuerung der in den Planeten P integrierten, ersten Antriebe 2.

Wie beispielhaft in den Fig.1d, 2d, 3d, 4d und 5d ersichtlich umfasst die Antriebseinheit 1 eine Steuereinheit ST, welche derart ausgestaltet ist, um die in den Planeten 4 integrierten, ersten Antriebe 2 miteinander zu betreiben und zu synchronisieren.

Im Sinne der vorliegenden Erfindung ist die Ansteuerung als Standardansteuerung für elektrische Synchronmotoren 10 mit Steuerlogik und Leistungselektronik-Einheit LEE (hier auch als "inverter" bezeichnet) ausgeführt. Die Steuerlogik (hier auch als "Motor-Controller" bezeichnet) produziert die entsprechenden Signale, welche den Inverter ansteuern, der dann die entsprechenden Motorspulen des elektrischen Synchronmotors 10 erregt, um eine fortlaufende Drehung mit definierter Drehzahl und Drehmoment zu bekommen. Die Synchonisierung der elektrischen Synchronmotoren 10 wird durch Ermittlung der Position und der Drehgeschwindigkeit des Ankers und für jeden elektrischen Synchronmotor 10 individuell durch Berechnung der Steuersignale, ermöglicht.

### Bezugszeichenliste

- 1: Antriebseinheit
- 2: Erster Antrieb
- 4: Planet
- 5: Planetenradträger
- 6; 6': Unteres / oberes Planetenrad
- 7: Elektrische Versorgungsleitungen
- 9: Tragarme (zur Befestigung des Planetenradträgers 5 am Getriebegehäuse G)
- 10: Elektrischer Synchronmotor
- 11: Innenläuferteil (des elektrischen Synchronmotors)
- 12: Ständerteil
- 13: Lagermast
- 14: Aussenmast
- 15: Welle
- 16: Aussenläuferteil (des elektrischen Synchronmotors)
- 17: Sonnenrad
- 18: (Innenliegender, aussenverzahnter) Zahnradring
- 19: (Aussenliegender, innenverzahnter) Zahnradring
- 20: Zahnradringmitnehmer
- 24: Zentrales Antriebszahnrad
- 25: Antriebsstrang
- 26: Antriebsstrangzahnrad
- 27: Zentrale Antriebswelle
- 30: Drehmomentgebergetriebe
- B: Bodenelement
- BS: Batterie-Speichereinheit
- G: Getriebegehäuse
- M: Magnetspalt
- P: Planetenradachse
- PI: Planetengetriebe
- R: Rohrelement
- S: Stiftförmiges Element
- ST: Steuereinheit
- TK: Zweiter als thermodynamische Kraftmaschine ausgestalteter Antrieb
- V: Verbindungselemente
- W: Wicklungen (des Ständerteils)

## Patentansprüche

1. Antriebseinheit (1), insbesondere zum Antreiben eines Hauptrotors eines Drehflüglers, umfassend:
ein Planetengetriebe (PI), wobei das Planetengetriebe (PI) mehrere Planeten (4) umfasst, wobei jeder Planet (4) jeweils mindestens ein Planetenrad (6;6') mit Zahnung aufweist und die Planeten (4) konzentrisch zu einer zentrischen Achse (z) innerhalb des Planetengetriebes (PI) angeordnet sind, so dass eine rotierbare Welle (15), insbesondere eine Rotorwelle des Drehflüglers, mittels der Planeten (4) oder eines Sonnenrads (17) antreibbar ist, **dadurch gekennzeichnet ist, dass**
in mindestens einen Planeten (4) ein erster Antrieb (2), insbesondere ein elektrischer Antrieb, integriert ist, wodurch ein innerer Antrieb innerhalb des Planetengetriebes (PI) gebildet wird, so dass die Welle (15) durch den ersten Antrieb (2) in Rotation versetzbar ist.

2. Antriebseinheit (1), insbesondere zum Antreiben eines Hauptrotors eines Drehflüglers, nach Patentanspruch 1,
**dadurch gekennzeichnet, dass**
erste Antrieb (2) als ein elektrischer Drehzahl und Drehmoment regelbarer Motor, insbesondere als ein elektrischer Synchronmotor (10) mit Innenläuferteil (11), ausgestaltet ist.

3. Antriebseinheit (1), insbesondere zum Antreiben eines Hauptrotors eines Drehflüglers, nach Patentanspruch 1 oder 2,
**dadurch gekennzeichnet, dass**
erste Antrieb (2) ein elektrischer Antrieb ist, wobei der mindestens eine Planet (4) einen ruhenden Ständerteil (12), einen rotierbaren Läuferteil und das mindestens eine indirekt oder direkt am Läuferteil befestigte Planetenrad (6;6') mit einer Aussenverzahnung umfasst und der Planet (4) mittels Planetenradträger (5) innerhalb des Planetengetriebes (PI) mit dem Sonnenrad (17) und / oder der rotierbaren Welle (15) wirkverbunden gehalten ist.

4. Antriebseinheit (1), insbesondere zum Antreiben eines Hauptrotors eines Drehflüglers, nach einem der vorherigen Patentansprüche, **dadurch gekennzeichnet, dass**
die Planetenräder (6;6') ortsfest und um ihre Planetenradachse (P) rotierbar gelagert sind, und dass die ortsfesten Planetenräder (6;6') von einem um die zentrische Achse (z) rotierbaren innenverzahnten Zahnradring (19) umschlossen sind und / oder ein innenliegender, aussenverzahnter Zahnradring (18) von den unteren und / oder oberen Planetenrädern (6;6') umschlossen ist, und der Zahnradring (19) und / oder der aussenverzahnte Zahnradring (18) derart rotierbar ist, so dass die Welle (15), insbesondere die Rotorwelle, mittels eines am Zahnradring (19) und an der Welle (15), insbesondere Rotorwelle, befestigten Zahnradringmitnehmers (20) und / oder die Welle (15), insbesondere die Rotorwelle, mittels des aussenverzahnten Zahnradrings (18) in Rotation versetzbar ist.

5. Hybridantrieb umfassend eine Antriebseinheit (1) nach einem der vorherigen Patentansprüche, wobei der erste, insbesondere elektrische, Antrieb (2) mit einem zweiten, als thermodynamische Kraftmaschine oder als weiterer elektrischer Antrieb ausgestalteten, und ausserhalb des Planetengetriebes (PI) sich befindlichen Antrieb (TK) mechanisch gekoppelt ist.

6. Drehflügler, umfassend eine Antriebseinheit (12) gemäss einem der Patentansprüche 1 bis 4 oder den Hybridantrieb gemäss Patentanspruch 5.

7. Drehflügler nach Patentanspruch 6,
**dadurch gekennzeichnet, dass**
der mindestens eine, vorzugsweise die Vielzahl erster, elektrischer Antriebe (2) derart ausgelegt und dimensioniert ist, so dass ein Hauptrotor und / oder Heckrotor eines Drehflüglers, insbesondere eines Helikopters, autark ohne einen zusätzlichen Antrieb antreibbar ist.

8. Drehflügler mit einem Hybridantrieb (1) nach Patentanspruch 6 oder 7,
**dadurch gekennzeichnet, dass**
der erste, insbesondere elektrische, Antrieb (2) mit dem zweiten, als thermodynamische Kraftmaschine ausgestalteten, Antrieb (TK) mechanisch gekoppelt werden kann, insbesondere indem das zentrale Sonnenrad (17) durch eine zweite Antriebseinheit antreibbar ist, und dass die zweite Antriebseinheit mit einem zweiten, als thermodynamische Kraftmaschine ausgestalteten Antrieb (TK) verbunden ist und in einer mechanischen Wirkverbindung steht, beispielsweise einem Verbrennungsmotor, Turbinenmotor, Fremdzündungsmotor, Dieselmotor, Brennstoffzellenantrieb oder dergleichen, so dass der mindestens eine erste, insbesondere elektrische, Antrieb (2) und der zweite Antrieb (TK) über das Planetengetriebe (PI) gekoppelt sind, der elektrische Antrieb (2) den zweiten Antrieb (TK) beim Antreiben des Hauptrotors und / oder Heckrotors unterstützen kann beziehungsweise umgekehrt, und dadurch ein Hybridantrieb ausgebildet wird.

9. Drehflügler, insbesondere Helikopter, nach einem der Patentansprüche 6 bis 8,
**dadurch gekennzeichnet, dass**
die Welle (15) eine Rotorwelle eines Drehflüglers ist, wobei die Rotorwelle zweiteilig ausgestaltet ist und einen Lagermast (13) sowie einen Aussenmast (14) umfasst, wobei der Aussenmast (14) als Hohlkörper ausgestaltet rotierbar um die zentrische Achse (Z) relativ zum Lagermast (13), den Lagermast (13) konzentrisch umgebend, gelagert ist, und wobei der Aussenmast (14) mit dem als Planetengetriebe (PI) ausgestalteten Helikopterrotorgetriebe wirkverbindbar ist, wobei der Lagermast (13) ortsfest und drehfest im Drehflügler lagerbar ist, sodass der Aussenmast (14) drehfest mit einem Hauptrotor koppelbar ist und mit dem als Planetengetriebe (PI) ausgestalteten Helikopterrotorgetriebe in Rotation versetzbar ist.

10. Drehflügler, insbesondere Helikopter, nach Patentanspruch 9,
**dadurch gekennzeichnet, dass**
die Welle, insbesondere Rotorwelle, mit einem Antriebszahnrad (24) drehfest koppelbar ist, wobei das Antriebszahnrad (24) mit dem zentralen Sonnenrad (17) drehfest verbunden und auf dem Lagermast (13) rotierbar lagerbar ist mittels mindestens eines Radiallagers, und mittels des zentralen Sonnenrads (17) eine Rotation von mindestens einem unteren Planetenrads (6) an einer dem Antriebszahnrad (24) zugewandten Seite eines jeweiligen Planetenradträgers (5) um eine jeweilige Planetenradachse (P) erreichbar ist, und wobei mindestens ein, dem mindestens einen unteren Planetenrad (6) zugehöriges, ortsfest gelagertes oberes Planetenrads (6') von einem um die zentrische Achse (Z) rotierbaren, innenverzahnten Zahnradring (19) umschlossen ist und zwischen Zahnradring (19) und dem Aussenmast (14) der als Kraftübertragungseinrichtung fungierende Zahnradringmitnehmer (20) derart anbringbar oder angeformt ist, so dass ausgehend von einer Rotationsbewegung des Antriebszahnrads (24) der Aussenmast (14) und der mit dem Aussenmast (14) drehfest gekoppelte Hauptrotor in Rotation versetzbar ist.

11. Drehflügler, insbesondere Helikopter, nach einem der Patentansprüche 6 bis 10,
**dadurch gekennzeichnet, dass**
die Antriebseinheit (1) eine elektrische Energiequelle, welche eine Batterie-Speichereinheit (BS) ist, umfasst, und wobei der erste Antrieb in Form eines elektrischen Antriebs (2) des Hybridantriebs in einem drehfest gekoppelten Zustand zwischen dem ersten, insbesondere elektrischen, Antrieb (2) und dem zweiten, als thermodynamische Kraftmaschine ausgestalteten, Antriebs (TK) und während des Betriebs des zweiten Antrieb (TK) der erste, elektrische Antrieb (2) als Generator fungieren kann für eine zusätzliche Energierückgewinnung für die Batterie-Speichereinheit (BS).

12. Drehflügler, insbesondere Helikopter, nach Patentanspruch 11,
**dadurch gekennzeichnet, dass**
im ersten, elektrischen Antrieb (2) ein Gleichrichter, insbesondere in Form einer Sperrdiode, vorgesehen ist, wodurch im Nichtbetrieb des elektrischen Antriebs (2) die Batterie-Speichereinheit (BS) aufgeladen werden kann.

13. Drehflügler, insbesondere Helikopter, nach Patentanspruch 11 oder 12,
**dadurch gekennzeichnet, dass**
eine Logik einer Steuereinheit (ST) im Weiteren einen automatischen Moduswechsel zwischen der Drehmomenterzeugung zum Antreiben des Rotors und der zusätzlichen Energierückgewinnung für die Batterie-Speichereinheit (BS) erlaubt.

## Claims

1. A drive unit (1), particularly for driving a main rotor of a rotary wing aircraft, comprising:
a planetary gear mechanism (PI), wherein the planetary gear mechanism (PI) comprises a plurality of planetary gears (4), wherein each planetary gear (4) has at least one planet wheel (6; 6') with toothing and the planetary gears (4) are arranged concentrically to a central axis (z) inside the planetary gear mechanism (PI), so that a rotatable shaft (15), in particular a rotor shaft of the rotary wing aircraft, can be driven by means of the planetary gears (4) or a sun wheel (17),
**characterized in that**
a first drive (2), particularly an electric drive, is integrated into at least one planetary gear (4), as a result of which an inner drive is formed inside the planetary gear mechanism (PI) so that the shaft (15) can be set rotating by the first drive (2).

2. The drive unit (1), particularly for driving a main rotor of a rotary wing aircraft, according to patent claim 1,
**characterized in that**
the first drive (2) is configured as an electric motor that can be regulated with regards to rotational speed and torque, particularly as an electric synchronous motor (10) with an internal rotor part (11).

3. The drive unit (1), particularly for driving a main rotor of a rotary wing aircraft, according to patent claim 1 or 2,
**characterized in that**
the first drive (2) is an electric drive, wherein the at least one planetary gear (4) comprises a stationary stator part (12), a rotatable rotor part and the at least one planet wheel (6; 6') with an outer toothing, the at least one planet wheel (6; 6') being fastened indirectly or directly on the rotor part and the planetary gear (4) is held in an operatively connected manner with the sun wheel (17) and/or the rotatable shaft (15) by means of planet wheel carriers (5) inside the planetary gear mechanism (PI).

4. The drive unit (1), particularly for driving a main rotor of a rotary wing aircraft, according to one of the preceding patent claims,
**characterized in that**
the planet wheels (6; 6') are mounted stationary and such that they can rotate about their respective planet wheel axes (P), and **in that** the stationary planet wheels (6; 6') are surrounded by an internally toothed annular gear (19) which can rotate about the central axis (z) and/or an inner externally toothed annular gear (18) is surrounded by the lower and/or the upper planet wheels (6; 6'), and the annular gear (19) and/or the externally toothed annular gear (18) can be rotated in such a manner that the shaft (15), particularly the rotor shaft, can be set rotating by means of an annular-gear driver (20) which is fastened to the annular gear (19) and to the shaft (15), particularly rotor shaft, and/or the shaft (15), particularly the rotor shaft, can be set rotating by means of the externally toothed annular gear (18).

5. A hybrid drive comprising a drive unit (1) according to one of the preceding patent claims, wherein the first, particularly electric, drive (2) is mechanically coupled to a second drive (TK), which is configured as a thermodynamic engine or as a further electric drive and is located outside of the planetary gear mechanism (PI).

6. A rotor wing aircraft comprising a drive unit (12) according to one of patent claims 1 to 4 or the hybrid drive according to patent claim 5.

7. The rotary wing aircraft according to patent claim 6,
**characterized in that**
the at least one, preferably the plurality of first electric drives (2) is configured and dimensioned in such a manner that a main rotor and/or tail rotor of a rotary wing aircraft, particularly a helicopter, can be driven autonomously without an additional drive.

8. The rotary wing aircraft with a hybrid drive (1) according to patent claim 6 or 7, **characterized in that**
the first, particularly electric, drive (2) can be mechanically coupled to the second drive (TK) which is configured as a thermodynamic engine, particularly **in that** the central sun wheel (17) can be driven by a second drive unit, and **in that** the second drive unit is connected to a second drive (TK), which is configured as a thermodynamic engine, and is in mechanical operative connection, for example an internal combustion engine, turbine motor, spark-ignition engine, diesel engine, fuel cell drive or the like, so that the at least one first, particularly electric, drive (2) and the second drive (TK) are coupled by means of the planetary gear mechanism (PI), the electric drive (2) can support the second drive (TK) with driving the main rotor and/or tail rotor or vice versa, and as a result, a hybrid drive is formed.

9. The rotary wing aircraft, particularly helicopter, according to one of patent claims 6 to 8, **characterized in that**
the shaft (15) is a rotor shaft of a rotary wing aircraft, wherein the rotor shaft is configured to be two-part and comprises a bearing mast (13) and an outer mast (14), wherein the outer mast (14) is configured as a hollow body and mounted rotatably about the central axis (Z) relative to the bearing mast (13), concentrically surrounding the bearing mast (13), and wherein the outer mast (14) can be operatively connected to the helicopter rotor gear mechanism, which is configured as a planetary gear mechanism (PI), wherein the bearing mast (13) can be mounted stationary and in a rotationally fixed manner in the rotary wing aircraft, so that the outer mast (14) can be coupled to a main rotor in a rotationally fixed manner and can be set rotating using the helicopter rotor gear mechanism, which is configured as a planetary gear mechanism (PI).

10. The rotary wing aircraft, particularly helicopter, according to patent claim 9, **characterized in that**
the shaft, particularly rotor shaft, can be coupled in a rotationally fixed manner to a drive gear (24), wherein the drive gear (24) is connected in a rotationally fixed manner to the central sun wheel (17) and can be rotatably mounted on the bearing mast (13) by means of at least one radial bearing, and a rotation of at least one lower planet wheel (6) on a side of a respective planet wheel carrier (5) facing the drive gear (24) about a respective planet wheel axis (P) can be achieved by means of the central sun wheel (17), and wherein at least one upper planet wheel (6'), which is associated to the at least one lower planet wheel (6) and which is mounted stationary, is surrounded by an internally toothed annular gear (19), which can be rotated about the central axis (Z), and the annular-gear driver (20), which functions as force-transmission device, can be attached or is moulded on between annular gear (19) and the outer mast (14) in such a manner that starting from a rotational movement of the drive gear (24), the outer mast (14) and the main rotor, which is coupled to the outer mast (14) in a rotationally fixed manner, can be set rotating.

11. The rotary wing aircraft, particularly helicopter, according to one of patent claims 6 to 10,
**characterized in that**
the drive unit (1) comprises an electrical energy source, which is a battery storage unit (BS), and wherein the first drive in the form of an electric drive (2) of the hybrid drive in a rotationally-fixed coupled state between the first, particularly electric, drive (2) and the second drive (TK), which is configured as a thermodynamic engine, and during the operation of the second drive (TK), the first electric drive (2) can function as a generator for an additional energy recovery for the battery storage unit (BS).

12. The rotary wing aircraft, particularly helicopter, according to patent claim 11, **characterized in that**
a rectifier, particularly in the form of a blocking diode, is provided in the first electric drive (2), as a result of which the battery storage unit (BS) can be charged when the electric drive (2) is not operating.

13. The rotary wing aircraft, particularly helicopter, according to patent claim 11 or 12, **characterized in that**
a logic of the control unit (ST) further allows an automatic change of mode between torque generation for driving the rotor and additional energy recovery for the battery storage unit (BS).

## Revendications

1. Unité d'entraînement (1), en particulier pour l'entraînement d'un rotor principal d'un giravion, comprenant: un train épicycloïdal d'engrenages (PI), le train épicycloïdal (PI) comprenant plusieurs planètes (4), chaque planète (4) comprenant respectivement au moins une roue satellite (6 ; 6') dentée et les planètes (4) sont disposées de manière concentrique par rapport à un axe central (z) à l'intérieur du train épicycloïdal (PI), de sorte qu'un arbre rotatif (15), en particulier un arbre de rotor du giravion, soit entraîné au moyen des planètes (4) ou d'une roue planétaire (17),
**caractérisée en ce qu'**un premier moteur (2), en particulier un moteur électrique, est intégré dans au moins une planète (4), ce qui forme un entraînement interne à l'intérieur du train épicycloïdal d'engrenages (PI), de sorte que l'arbre (15) soit entraîné en rotation par le premier moteur (2).

2. Unité d'entraînement (1), en particulier pour l'entraînement d'un rotor principal d'un giravion, selon la revendication 1, **caractérisée en ce que** le premier moteur (2) est conçu comme un moteur électrique à vitesse et couple réglables, en particulier comme un moteur électrique synchrone (10) avec une partie rotor intérieure (11).

3. Unité d'entraînement (1), en particulier pour l'entraînement d'un rotor principal d'un giravion, selon la revendication 1 ou 2, **caractérisée en ce que** le premier moteur (2) est un entraînement électrique, dans lequel l'au moins une planète (4) comprend une pièce de stator (12) fixe, une pièce de rotor rotative et l'au moins une roue satellite (6;6') avec une denture extérieure fixée directement ou indirectement à la pièce de rotor et la planète (4) est maintenue en liaison active au moyen de porte-satellites (5) à l'intérieur du train épicycloïdal d'engrenages (PI) avec la roue planétaire (17) et/ou l'arbre rotatif (15).

4. Unité d'entraînement (1), en particulier pour l'entraînement d'un rotor principal d'un giravion, selon l'une des revendications précédentes, **caractérisée en ce que** les roues satellites (6 ; 6') sont montées de manière fixe et de manière à pouvoir tourner autour de leur axe de roue satellite (P), et **en ce que** les roues satellites fixes (6 ; 6') sont entourées d'une bague d'engrenage (19) à denture intérieure configurée pour pouvoir tourner autour de l'axe central (z) et / ou une bague d'engrenage (18) à denture extérieure située à l'intérieur est entourée par les roues satellites inférieures et/ou supérieures (6 ; 6'), et la bague d'engrenage (19) et/ou la bague d'engrenage (18) à denture extérieure est configurée pour pouvoir être mise en rotation de sorte que l'arbre (15), en particulier l'arbre de rotor, soit mis en rotation au moyen d'un entraîneur de bague d'engrenage (20) fixé à la bague d'engrenage (19) et à l'arbre (15), en particulier à l'arbre de rotor, et/ou l'arbre (15), en particulier l'arbre de rotor, soit mis en rotation au moyen de la bague d'engrenage (18) à denture extérieure.

5. Entraînement hybride comprenant une unité d'entraînement (1) selon l'une des revendications précédentes, le premier entraînement (2), notamment électrique, étant couplé mécaniquement à un deuxième entraînement (TK) conçu comme un moteur thermodynamique ou comme un autre entraînement électrique et se trouvant à l'extérieur du train épicycloïdal d'engrenages (PI).

6. Giravion comprenant une unité d'entraînement (12) selon l'une des revendications 1 à 4 ou l'entraînement hybride selon la revendication 5.

7. Giravion selon la revendication 6, **caractérisé en ce que** l'au moins un, de préférence la pluralité des premiers moteurs électriques (2) est conçu et dimensionné de telle sorte qu'un rotor principal et/ou un rotor de queue d'un giravion, en particulier d'un hélicoptère, soit entraîné de manière autonome sans entraînement supplémentaire.

8. Giravion avec un entraînement hybride (1) selon la revendication 6 ou 7, **caractérisé en ce que** le premier entraînement (2), en particulier électrique, peut être couplé mécaniquement au deuxième entraînement (TK) conçu comme un moteur thermodynamique, en particulier **en ce que** la roue planétaire centrale (17) peut être entraînée par une deuxième unité d'entraînement, et **en ce que** la deuxième unité d'entraînement est reliée à un deuxième entraînement (TK) conçu comme un moteur thermodynamique et est en liaison active mécanique, par exemple un moteur à combustion interne, un moteur à turbine, un moteur à allumage commandé, un moteur diesel, un entraînement à pile à combustible ou similaire, de sorte que le premier entraînement (2), en particulier électrique, et le deuxième entraînement (TK) sont couplés par l'intermédiaire du train épicycloïdal (PI), l'entraînement électrique (2) étant configuré pour pouvoir assister le deuxième entraînement (TK) lors de l'entraînement du rotor principal et/ou du rotor de queue, ou inversement, formant ainsi un entraînement hybride.

9. Giravion, en particulier hélicoptère, selon l'une des revendications 6 à 8, **caractérisé en ce que** l'arbre (15) est un arbre de rotor d'un giravion, l'arbre de rotor étant conçu en deux parties et comprenant un mât de palier (13) ainsi qu'un mât extérieur (14), le mât extérieur (14) étant conçu comme un corps creux pouvant tourner autour de l'axe central (Z) par rapport au mât de palier (13), le mât extérieur (14) étant configuré pour pouvoir être relié fonctionnellement au train épicycloïdal d'engrenages, le mât de palier (13) étant configuré pour pouvoir être monté de manière fixe et solidaire en rotation dans le giravion, de sorte que le mât extérieur (14) soit couplé solidairement en rotation à un rotor principal et mis en rotation avec l'engrenage du rotor d'hélicoptère conçu comme un train épicycloïdal d'engrenages (PI).

10. Giravion, en particulier hélicoptère, selon la revendication 9, **caractérisé en ce que** l'arbre, en particulier l'arbre de rotor, est conçu pour pouvoir être couplé solidairement en rotation à une roue planétaire d'entraînement (24), la roue planétaire d'entraînement (24) étant reliée solidairement en rotation à la roue planétaire centrale (17) et étant configurée pour pouvoir être montée de manière rotative sur le mât de palier (13) au moyen d'au moins un palier radial, et au moyen de la roue planétaire centrale (17), obtenant ainsi une rotation d'au moins une roue planétaire inférieure (6) sur un côté tourné vers la roue dentée d'entraînement (24) d'un porte-satellites respectif (5) autour d'un axe de roue satellite respectif (P), et dans lequel au moins une roue satellite supérieure (6') montée fixement et appartenant à l'au moins une roue satellite inférieure (6) est entourée par une bague de roue dentée (19) à denture intérieure pouvant tourner autour de l'axe central (Z), et l'entraîneur de bague d'engrenage (20) faisant office de dispositif de transmission de force conçu pour pouvoir être monté ou formé de cette manière entre la bague de roue dentée (19) et le mât extérieur (14), de sorte qu'à partir d'un mouvement de rotation de la roue dentée d'entraînement (24), le mât extérieur (14) et le rotor principal couplé de manière solidaire en rotation avec le mât extérieur (14) soient mis en rotation.

11. Giravion, en particulier hélicoptère, selon l'une des revendications 6 à 10, **caractérisé en ce que** l'unité d'entraînement (1) comprend une source d'énergie électrique qui est une unité de stockage de batterie (BS), et dans lequel le premier moteur sous la forme d'un entraînement électrique (2) de l'entraînement hybride dans un état couplé sans rotation entre le premier entraînement (2), notamment électrique, et le deuxième entraînement (TK) conçu comme un moteur thermodynamique, et pendant le fonctionnement du deuxième entraînement (TK), le premier entraînement électrique (2) fonctionne comme un générateur dans le but d'une récupération d'énergie supplémentaire pour l'unité de stockage de batterie (BS).

12. Giravion, en particulier hélicoptère, selon la revendication 11, **caractérisé en ce qu'**un redresseur, en particulier sous la forme d'une diode de blocage, est prévu dans le premier moteur électrique (2), ce qui permet de recharger l'unité de stockage de batterie (BS) lorsque le moteur électrique (2) ne fonctionne pas.

13. Giravion, en particulier hélicoptère, selon la revendication 11 ou 12, **caractérisé en ce qu'**une logique d'une unité de contrôle (ST) permet en outre un changement de mode automatique entre la génération de couple pour entraîner le rotor et la récupération d'énergie supplémentaire pour l'unité de stockage de batterie (BS).
